# EUROPEAN PATENT SPECIFICATION

(11) **EP 4 209 915 B1**
(45) Date of publication and mention of the grant of the patent: **30.07.2025**
(21) Application number: 22206883.5
(22) Date of filing: 11.11.2022
(51) Int. Cl.: G06F 12/0862, G06F 9/38, G06F 9/30

(54) **REGISTER FILE PREFETCH**
REGISTERDATEIVORAUSHOLEN
PRÉEXTRACTION DE FICHIER DE REGISTRE

(30) Priority: 05.01.2022 US 202263296760 P; 30.09.2022 US 202217957977
(43) Date of publication of application: 12.07.2023
(73) Proprietor: INTEL Corporation, Santa Clara, CA 95054 (US)
(72) Inventor: Shukla, Sudhanshu, 560103 Bengaluru (IN); Bandishte, Sumeet, 452010 Indore (IN); Gaur, Jayesh, 560066 Bangalore (IN)
(74) Representative: Goddar, Heinz J.

(56) References cited:
- US-A1- 2017 024 205
- US-A1- 2019 012 267
- US-B1- 9 164 900
- ALVES RICARDO RICARDO ALVES@INTEL COM ET AL: "Early Address Prediction", ACM TRANSACTIONS ON ARCHITECTURE AND CODE OPTIMIZATION, ASSOCIATION FOR COMPUTING MACHINERY, US, vol. 18, no. 3, 8 June 2021 (2021-06-08), pages 1 - 22, XP058674631, ISSN: 1544-3566, DOI: 10.1145/3458883

## Description

### RELATED APPLICATION

The present application relates to and claims priority from U.S. Provisional Patent Application, Serial No. 63/296,760, filed JANUARY 5, 2022, entitled "REGISTER FILE PREFETCH".

### FIELD

The present disclosure generally relates to the field of processors. More particularly, some embodiments relate to the applications and/or methods for register file prefetch.

### BACKGROUND

Generally, a register file of a processor includes a plurality of processor registers. In most modern processors, Static Random-Access Memory (SRAM) is used to implement a register file.

Since processor operations rely on register files to store data for various processor operations, implementation of a register file can have a direct impact on processor performance.

US 9,164,900 B1 discloses a method for expanding preload capabilities of a memory to encompass a register file. The method comprises predicting an address of a memory location containing data to be accessed by a first memory operation instruction that has not yet executed, prior to the first memory operation instruction executing moving the data in the memory location to an unassigned register file entry, and causing a renaming register to assign the register file entry to an architectural register. Responsive to the renaming register assigning the register file entry to the architectural register, the method further comprises permitting a second instruction to execute using the data moved to the register file, wherein the second instruction is dependent on the first memory operation instruction.

US 2019/012267 A1 discloses an apparatus and method for controlling use of a register cache. The apparatus has execution circuitry for executing instructions to process data values, and a register file comprising a plurality of registers in which to store the data values for access by the execution circuitry. A register cache is also provided that has a plurality of entries and is arranged to cache a subset of the data values for access by the execution circuitry. Each entry is arranged to cache a data value and an indication of the register associated with that cached data value. Prefetch circuitry then performs prefetch operations to prefetch data values from the register file into the register cache. Timing indication storage is used to store, for each data value to be generated as a result of instructions being executed within the execution circuitry, a register identifier for that data value, and timing information indicating when that data value will be generated by the execution circuitry. Cache usage control circuitry is then responsive to receipt of a plurality of register identifiers associated with source data values for a pending instruction yet to be executed by the execution circuitry, to generate, with reference to the timing information in the timing indication storage, a timing control signal to control timing of at least one prefetch operation performed by the prefetch circuitry.

US 2017/024205 A1 discloses: systems, apparatuses, and methods for implementing a non-shifting reservation station. A dispatch unit may write an operation into any entry of a reservation station. The reservation station may include an age matrix for determining the relative ages of the operations stored in the entries of the reservation station. The reservation station may include selection logic which is configured to pick the oldest ready operation from the reservation station based on the values stored in the age matrix. The selection logic may utilize control logic to mask off columns of an age matrix corresponding to non-ready operation so as to determine which operation is the oldest ready operation in the reservation station. Also, the reservation station may be configured to dequeue operations early when these operations do not have load dependency.

ALVES RICARDO ALVES@INTEL COM ET AL, "Early Address Prediction", ACM TRANSACTIONS ON ARCHITECTURE AND CODE OPTIMIZATION, ASSOCIATION FOR COMPUTING MACHINERY, US, (20210608), vol. 18, no. 3, pages 1-22, discloses a pipeline prefetching technique that achieves state-of-the-art performance and data reuse without additional data storage, data movement, or validation overheads by adding address tags to the register file.

The present invention is defined by the appended set of claims. Preferred embodiments are defined by the dependent claims.

### BRIEF DESCRIPTION OF THE DRAWINGS

The detailed description is provided with reference to the accompanying figures. In the figures, the left-most digit(s) of a reference number identifies the figure in which the reference number first appears. The use of the same reference numbers in different figures indicates similar or identical items.
FIG. 1A illustrates some components of an out-of-order processor core to support a register file prefetch operation, according to an embodiment.
FIG. 1B illustrates a flowchart of a method for register file prefetch operation and interaction with a processor load pipeline, according to an embodiment.
FIG. 2 illustrates a sample graph of instruction per cycle gains from register file prefetch over baseline, according to an embodiment.
FIG. 3A is a block diagram illustrating an exemplary instruction format according to embodiments.
FIG. 3B is a block diagram illustrating the fields of the instruction format that make up the full opcode field according to one embodiment.
FIG. 3C is a block diagram illustrating the fields of the instruction format that make up the register index field according to one embodiment.
FIG. 3D is a block diagram illustrating the fields of the instruction format that make up the augmentation operation field according to one embodiment.
FIG. 4 is a block diagram of a register architecture according to one embodiment.
FIG. 5A is a block diagram illustrating both an exemplary in-order pipeline and an exemplary register renaming, out-of-order issue/execution pipeline according to embodiments.
FIG. 5B is a block diagram illustrating both an exemplary embodiment of an in-order architecture core and an exemplary register renaming, out-of-order issue/execution architecture core to be included in a processor according to embodiments.
FIG. 6 illustrates a block diagram of a System On Chip (SOC) package in accordance with an embodiment.
FIG. 7 is a block diagram of a processing system, according to an embodiment.
FIG. 8 is a block diagram of an embodiment of a processor having one or more processor cores, according to some embodiments.
FIG. 9 is a block diagram of a graphics processor, according to an embodiment.

### DETAILED DESCRIPTION

In the following description, numerous specific details are set forth in order to provide a thorough understanding of various embodiments. However, various embodiments may be practiced without the specific details. In other instances, well-known methods, procedures, components, and circuits have not been described in detail so as not to obscure the particular embodiments. Further, various aspects of embodiments may be performed using various means, such as integrated semiconductor circuits ("hardware"), computer-readable instructions organized into one or more programs ("software"), or some combination of hardware and software. For the purposes of this disclosure reference to "logic" shall mean either hardware (such as logic circuitry or more generally circuitry or circuit), software, firmware, or some combination thereof.

As mentioned above, implementation of a register file can have a direct impact on processor performance. Generally, prefetching data can be used to reduce the effective latency of load operations. However, most of the prefetching work has only been focused on memory to cache prefetching.

To this end, some embodiments provide techniques for Register File Prefetch (RFP). In an embodiment, a prefetch operation is performed from a Level 1 (L1) cache (also referred to herein interchangeably as a Data Cache Unit (DCU)) to a Register File ("RF" which is sometimes also referred to as a Physical Register File (PRF)). This register file prefetch operation (referred to herein sometimes as "RFP") may effectively reduce/hide the L1 cache latency by prefetching load data into a register file, in turn, potentially providing a significant Instructions Per Cycle (IPC) improvement. As discussed herein, a "register file" generally refers to a plurality of registers. Further, the plurality of registers, forming a register file, do not necessarily need to include a contiguous block of registers.

In an embodiment, the RFP operation is performed using a predicted address and the corresponding load operation, upon execution, checks whether the predicted address matches the load address. If there is a match, the prefetched data is supplied to the dependent operation(s), and the load operation effectively bypasses the caches. Otherwise, if there is a mismatch during execution between the predicted address and the load address, the load operation proceeds with an Out-Of-Order (OOO) processor pipeline cache access and supplies the load data to the dependent operation(s).

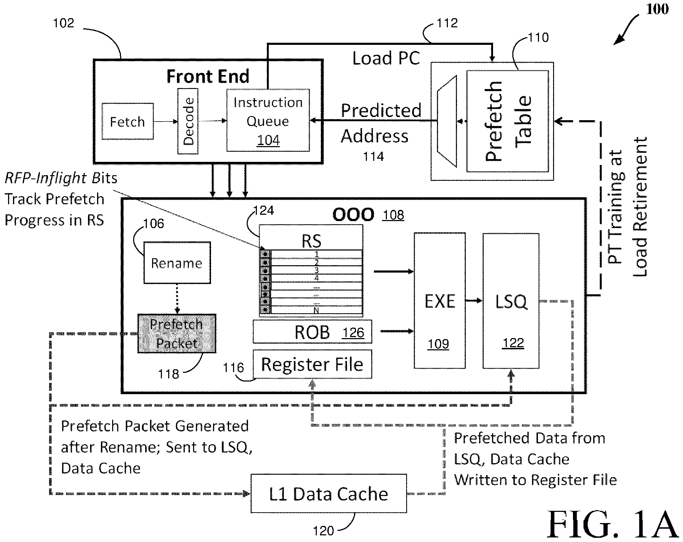

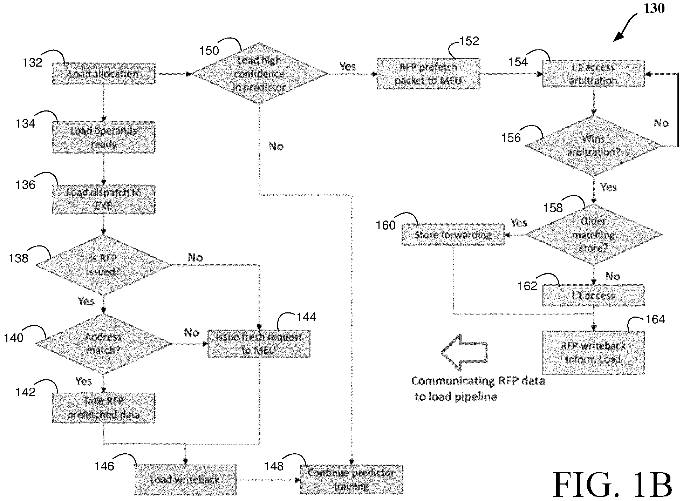

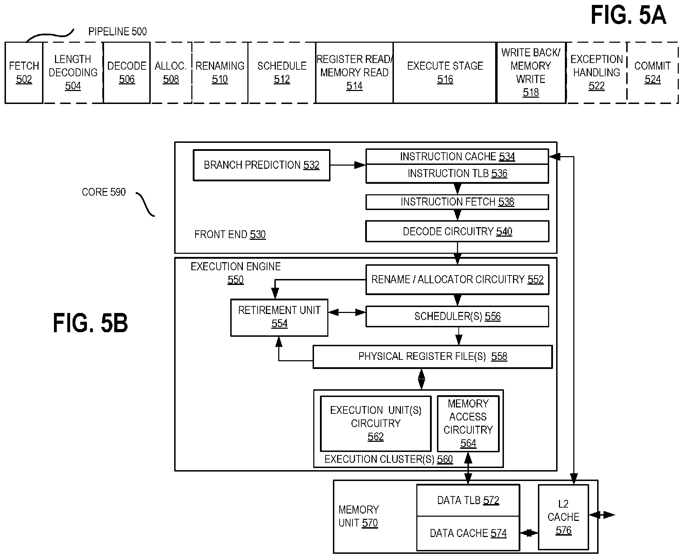

Moreover, since L1 and PRF bandwidths are at a premium in processors, an RFP request may need to be smartly issued to not affect L1/PRF bandwidth. To achieve this goal, two solutions may be utilized in various embodiments:
(1) Instruction Set Architecture (ISA) or instruction(s) (such as Instruction Hints): a compiler, software application, Operating System (OS), or a software programmer/user may identify one or more load operations that are less costly and/or easier to prefetch, while improving performance, and add a corresponding hint to an instruction. Such hint(s) may be implemented in different ways such as one or more bits in an operand of an instruction to indicate whether a given load instruction is to cause a prefetch load operation. Alternatively, an operand of the instruction may include an address to a memory location (such as a register, cacheline, main memory (such as a Dynamic Random Access Memory (DRAM), Double Data Rate (DDR) memory) address, etc.). Moreover, a table and/or counter(s) may store information about load instruction prefetching (e.g., prefetch table 110 of FIG. 1A, which may be implemented as logic, e.g., providing a hardware structure, a software structure, and so on)) to indicate the relative cost/ease (e.g., latency) associated with invoking a prefetch for a given load instruction to assist in determining whether a hint is to be invoked for that load operation. These hint load operations, in turn, may initiate register file prefetches. Since the number of hint load operations is generally kept lower than the total load operations, this approach is expected to reduce pressure on L1/PRF bandwidth.
(2) Hardware Only Solution: In this solution, hardware logic/circuitry (an execution circuitry such as those discussed with reference to FIGs. 1 and/or 5B) will issue prefetch requests for as many load operations as possible, e.g., based on availability of resources/bandwidth to execute the prefetch operations. In an embodiment, these prefetch requests may be performed at lower priority than ongoing load operation "bypasses", existing hardware/software prefetch requests, etc. Moreover, a DCU generally has a fixed bandwidth but many loads could be bidding for the DCU ports. Some load operations may be dispatched to DCU immediately while others may be delayed due to the bidding. The loads that are dispatched immediately are labelled as "bypasses" herein and will have a higher bidding priority than the prefetches introduced by RFP. Accordingly, for applications which do not have high-bandwidth requirements, this hardware only solution can still operate efficiently.

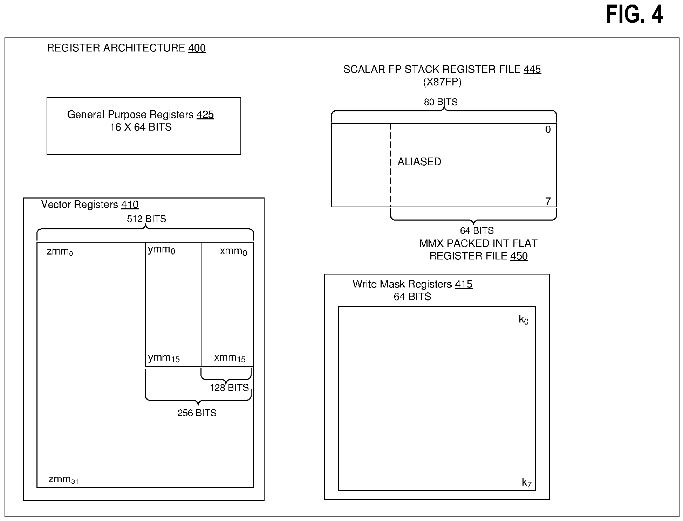

FIG. 1A illustrates some components of an OOO processor core 100 to support an RFP operation, according to an embodiment. Further details of a sample architecture for a register file are discussed with reference to FIG. 4. FIG. 5A provides some details about both an exemplary in-order processor core pipeline and an exemplary register renaming, out-of-order issue/execution processor core pipeline. FIG. 5B provides some details about both an exemplary embodiment of an in-order architecture processor core and an exemplary register renaming, out-of-order issue/execution architecture processor core. Moreover, one or more components of the core 100 may be the same or similar to components having the same names discussed with reference to FIGs. 4, 5A, and 5B.

Referring to FIG. 1A, the OOO processor core 100 includes a front-end 102 with fetch and decode logic (see, e.g., the discussion of pipeline 500 of FIG. 5A and/or the front end 530 of FIG. 5B). The front-end 102 also includes an instruction queue 104.

In an embodiment, the RFP request is issued as soon as a load operation allocation occurs for OOO allocation. In one embodiment, the RFP operation is performed after a rename stage 106 in the OOO execution engine 108 where the OOO execution engine 108 includes one or more execution units 109 (see, e.g., renaming stage 510 of FIG. 5A and/or the rename/allocator circuitry 552 of FIG. 5B occurring after allocation). For example, the RFP request causes a look up in a prefetch table 110 with the Program Counter (PC) 112 of the load operation. In various embodiments, constant and/or stride prefetching may be allowed. The prefetch table 110 then issues a prefetch operation for a predicted address 114 and this prefetch operation causes a writeback to the same PRF entry that was assigned to the load operation in the register file 116.

When the load operation is issued, it wakes up its dependent operation in the next cycle. In an Address Generation Unit (AGU), the load address is checked with the prefetch address. If the two addresses match, the load operation is simply dropped and the prefetched value is supplied to the dependent operation. If the addresses do not match, the dependent operation is restarted, and waits for the original load operation (like the baseline) to execute. One or more embodiments result in approximately a 1.19% Geomean on server workloads.

Referring back to FIG. 1A, "RFP" can provide a mechanism for prefetching data (e.g., using a prefetch packet 118 generated after the rename stage 106 and sent to the L1/data cache 120 and Load Store Queue (LSQ) 122) from the L1 cache or DCU 120 into the physical register file 116. By doing so, the original load operation need not go to the L1 cache 120 to obtain data but it may simply gain access to the data from the register file 116 (as long as the RFP address and load address match; otherwise, the load operation has to perform an L1 cache access). Therefore, a successful RFP shortens the latency of a load operation from approximately five cycles to one cycle in some implementations, which would significantly improve the system performance.

Further, in some embodiments, there are at least two ways in which a register prefetch may be executed:
(1) Software Solution- a compiler, software application, OS, or a programmer/user may identify loops where load addresses are strided. Then the compiler, software application, OS, or a programmer/user adds a special hint/instruction along with the load operations which will cause prefetching of data into the register file.
(2) Hardware Solution- An address predictor logic (e.g., prefetch table 110) is trained using load addresses in the processor core. The address predictor logic then issues prefetch requests when the load operation allocates and writes the prefetched data into the register file.

By contrast, some ISA instructions may only support transfer of data between the cache levels and no prefetch data movement into the register file.

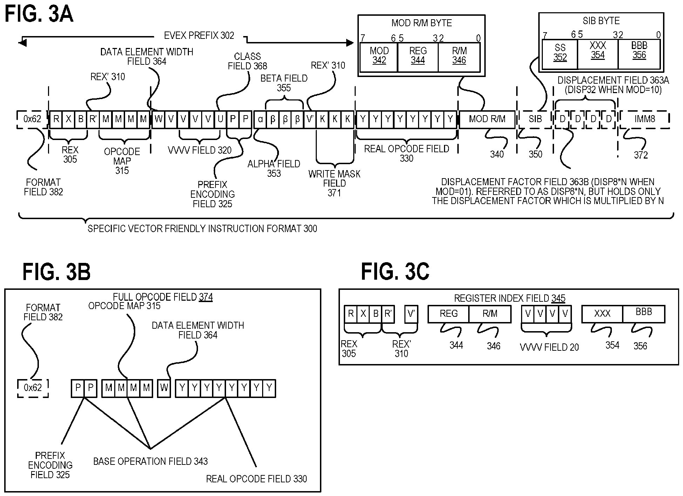

Furthermore, one or more instructions/ISAs discussed herein may comply with instruction formats detailed herein, e.g., with reference to FIGs. 3A et seq.

RFP may be tracked using simple micro-benchmarks to test the latency of the L1 cache. These are variations of the classic Load Latency benchmark. One such benchmark is shown below:

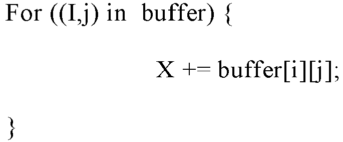

The runtime of the above is relatively easy to ascertain given the L1 cache latency versus in the presence of prefetching.

Moreover, in an embodiment, RFP provides a method of bringing load data from the L1 cache into the register file in anticipation of a future use. The load operation can use the data from the register file and save a trip to the L1 cache. This reduces a load operation's execution latency which, in turn, improves processor core performance.

### SOFTWARE COMPILER BASED SOLUTION

Some compilers can identify loops in the program easily. Take the following example:

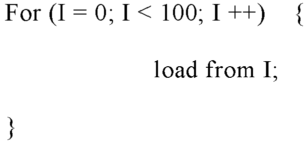

In the above loop, the load addresses are incrementing by one every iteration.

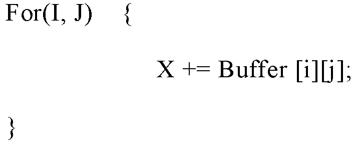

In the above code too, the load address is dependent on the iteration variable and has strided patterns.

In one embodiment, a compiler is configured to identify such loops where the load operation is dependent on the iteration variable. The compiler then inserts a hint along with the load operation. The x86 ISA already contains software prefetch instructions like Prefetch T0, Prefetch T1, etc., which can bring data to a specific cache level. Another prefetch instruction (e.g., Prefetch R) can be added, which brings data for the PRF. The modified code from example may look as follows:

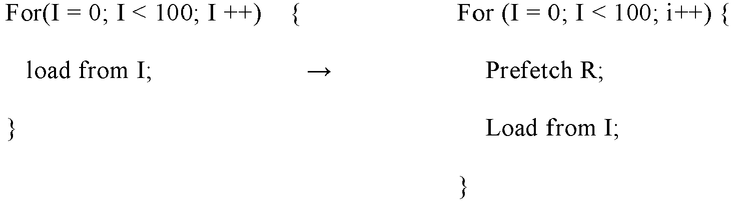

In an embodiment, this "Prefetch R" instruction may be used as a hint for opportunistic fetching of data and, as such, does not modify any architectural state.

### HARDWARE COMPILER BASED SOLUTION

Details of RFP hardware logic are discussed with reference to FIG. 1A above as well as below through the following operations: (1) address prediction of the concerned load operation; (2) launching a prefetch; (3) load pipeline in the presence of RFP; and/or (4) handling store-load forwarding, memory disambiguation and clears.

### ADDRESS PREDICTION

RFP may guess the address of a load operation ahead of time so as to launch a prefetch request while the load operation waits for its own execution. To do this, RFP may utilize an address predictor logic (e.g., prefetch table 110 of FIG. 1A) which predicts the load address at OOO allocation. The address predictor logic can be designed to track constant and/or strided addresses. When a load causes a writeback, the predictor logic snoops its address and records it in a table (e.g., prefetch table 110 of FIG. 1A).

In an embodiment, on every load writeback (e.g., at operation 146 of FIG. 1B), the predictor logic checks if the address is constant or has a fixed stride. If so, the predictor logic increments a confidence indicator for a corresponding table entry. Otherwise, the predictor logic resets the confidence following which the entry eventually is evicted from the table. Once sufficient confidence is achieved on the address pattern, the address predictor logic marks the load PC as "RFP prefetch-able".

### LAUNCHING A PREFETCH

At OOO allocation, the address predictor logic marks a load operation for RFP based on its confidence on the load PC. For the marked load, a prefetch packet (e.g., prefetch packet 118 of FIG. 1A) is created which contains the predicted address and the load operation's register file Identifier (ID). The prefetch packet is sent to a Memory Execution Unit (MEU) (not shown) where it arbitrates with other loads/RFP's for access to the L1 cache. In an embodiment, the LSQ 122 is a part of the MEU and holds all the loads/stores in the current OOO execution window and is used to ensure their ordering. Once the RFP gets access, it takes a few cycles (e.g., approximately five cycles), e.g., due to L1 latency, for the prefetch to bring data from the L1 cache (120) into the register file (116). After the prefetch is complete, a flag may be set informing the original load micro-op/operation that the prefetched data is successfully deposited in the register file.

In an embodiment, L1 cache misses arising from RFP requests are disallowed to proceed. Therefore, if an RFP request misses in the L1 cache, the prefetch may be canceled. This is to prevent unnecessary bandwidth hogging by RFP requests.

### LOAD PIPELINE IN PRESENCE OF RFP

In one embodiment, the load pipeline is modified to support the following three RFP scenarios:
(1) RFP completes before the load dispatches for execution: When RFP completes, a flag is set in an entry of the RS 124 for the load signifying the completion of RFP. When the load operation dispatches and finds this flag to be true, it checks whether the predicted address of the RFP matches its own address. If the addresses match, the load picks the prefetched data from the register file 120 and foregoes the trip to the L1 cache.
(2) RFP inflight when load dispatches for execution: If the RFP's predicted address matches the load's address, then the load waits for the RFP to finish. When the RFP data arrives from the L1, the load uses it and proceeds. If the load address mismatches the RFP's predicted address, the load issues its own L1 request and discards the RFP data.
(3) RFP is not dispatched when load dispatches for execution: an RFP request is not issued after the load has already dispatched since it will not lead to latency savings.

### HANDLING STORE-LOAD FORWARDING, MEMORY DISAMBIGUATION AND CLEARS

When the RFP is issued at load allocation, it is possible that there are older stores which are yet to execute or are inflight. These stores could potentially modify the data at the load's memory address. Therefore, the RFP request needs to account for all such stores which can potentially modify the data.

When an RFP is launched to the MEU, it scans all stores older than itself (starting from the youngest older store) and matches its address against the store's address. If there is a match, it waits for the store to complete and writes the store data into the register file.

If a store's address is unavailable (implying the store is yet to execute), the Memory Disambiguation (MD) mechanism may be relied on to decide whether the RFP needs to wait on the store or skip it. Based on the MD prediction, the RFP request proceeds accordingly and obtains the most updated data from an older store or the L1 cache. If the MD prediction was wrong, the entire machine may be flushed and execution restarted from the load instruction.

Lastly, if there are any Jump Execution Clears (JEClears), nukes, exceptions, etc. in the pipeline caused by instructions older than the RFP load, the prefetched data is removed.

Referring to FIG. 1A, in one embodiment, a Reservation Station (RS) 124 tracks the progress of the RFP based on one or more RFP-Inflight bits. And, when an RFP request is issued at load allocation in the RS 124, there may be older stores in a Reorder Buffer (ROB) 126 that are yet to execute or are inflight. To this end, in at least one embodiment, when an RFP request is launched to the L1 cache 120 and LSQ 122, all older stores (in a youngest-first order) in the ROB 126 are scanned and their addresses matched against the store's address. As discussed above, on a match, RFP waits for the store to complete and uses the stored data instead of the cached data for the prefetch.

FIG. 1B illustrates a flowchart of a method 130 for an RFP operation and interaction with a load pipeline, according to an embodiment. One or more operations of method 130 may be performed by the components discussed with reference to FIGs. 1A and 3A to 9.

Referring to FIGs. 1A and 1B, at an operation 132, a load operation is allocated (e.g., in the RS 124). At an operation 134, it is determined whether operands of the load operation are ready. Subsequently, at an operation 136, the load operation is dispatched to the execution unit (e.g., OOO execution unit 108). At an operation 138, it is determined whether an RFP is issued for the load operation and, if so, an operation 140 determines whether the predicted address of the RFP matches the load address. If there is a match, the prefetched data is supplied to the dependent operation(s) at an operation 142, and the load operation effectively bypasses the caches. Otherwise, if an RFP request is not issued or if there is a mismatch at operation 140 between the predicted address and the load address, the load operation proceeds with an Out-Of-Order (OOO) processor pipeline cache access (e.g., via the MEU) at an operation 144 to supply the load data to the dependent operation(s). After operations 142 or 144, method 132 continues with a load operation writeback at an operation 146, which causes an indication/signal to be transmitted to one or more dependent operations of the load operation to indicate that the load data is ready to be consumed from the load's PRF entry. Moreover, the actual data write operation to the load's PRF entry may have occurred well before any of the 134, 136, 138, 140, or 142 operations when the corresponding RFP request completes. After operation 146, method 132 proceeds to an operation 148 to continue predictor training.

After the load operation allocation (132), an operation 150 determines whether there is corresponding a high confidence for the load operation in the prefetch table 110 and, if not, method 132 proceeds to the operation 148 to continue training the predictor. Otherwise, if there is high confidence for the load operation present, an operation 152, an RFP prefetch packet is transmitted to the MEU and L1 cache 120 access arbitration is performed at an operation 154. After the PRF request wins the L1 cache access arbitration at operation 156, an operation 158 determines whether an older matching store is present (e.g., in the ROB 126). If so, an operation 160 performs store-load forwarding; otherwise, method 132 continues at an operation 162 to access the L1 cache 120. After operations 160 or 162, an operation 164 performs an RFP writeback to inform the load operation and RFP data is communicated to the load pipeline.

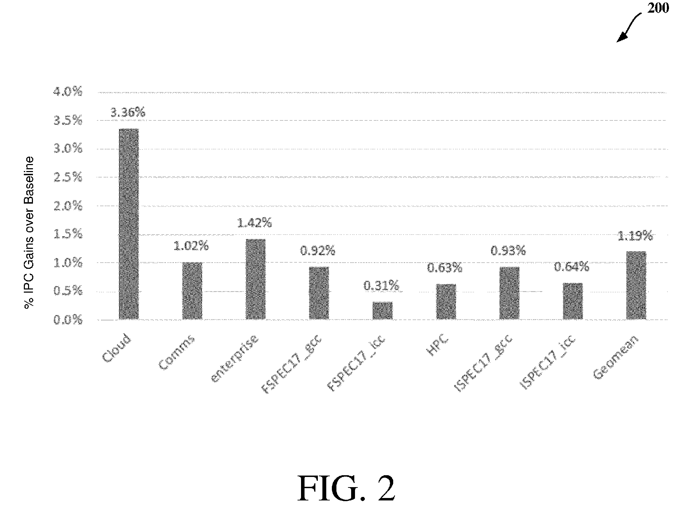

FIG. 2 illustrates a sample graph 200 of IPC gains from RFP over a baseline, according to an embodiment.

As shown in FIG. 2, RFP may deliver approximately 1.19% Geometric mean (Geomean) performance on a server configuration. Important applications like cloud demonstrate significantly high gains of approximately 3% from RFP. In FIG. 2, "HPC" refers to High Performance Computing.

As detailed herein, Register File Prefetch is a novel mechanism for solving the fundamental issue of memory latency plaguing modern superscalar processors. By virtually eliminating the trip to L1 cache, RFP saves crucial cycles from the critical path of the program and thus achieves significant performance improvement. As such, this technology is of high importance to current and future generation of processors.

Additionally, some embodiments may be applied in computing systems that include one or more processors (e.g., where the one or more processors may include one or more processor cores), such as those discussed with reference to FIGs. 1A et seq., including for example a desktop computer, a workstation, a computer server, a server blade, or a mobile computing device. The mobile computing device may include a smartphone, tablet, UMPC (Ultra-Mobile Personal Computer), laptop computer, Ultrabook^{™} computing device, wearable devices (such as a smart watch, smart ring, smart bracelet, or smart glasses), etc.

### INSTRUCTION SETS

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel^{®} 64 and IA-32 Architectures Software Developer's Manual, September 2014; and see Intel^{®} Advanced Vector Extensions Programming Reference, October 2014).

### EXEMPLARY INSTRUCTION FORMATS

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

While embodiments will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

FIG. 3A is a block diagram illustrating an exemplary instruction format according to embodiments. FIG. 3A shows an instruction format 300 that is specific in the sense that it specifies the location, size, interpretation, and order of the fields, as well as values for some of those fields. The instruction format 300 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions.

EVEX Prefix (Bytes 0-3) 302 - is encoded in a four-byte form.

Format Field 382 (EVEX Byte 0, bits [7:0]) - the first byte (EVEX Byte 0) is the format field 382 and it contains 0x62 (the unique value used for distinguishing the vector friendly instruction format in one embodiment).

The second-fourth bytes (EVEX Bytes 1-3) include a number of bit fields providing specific capability.

REX field 305 (EVEX Byte 1, bits [7-5]) - consists of a EVEX.R bit field (EVEX Byte 1, bit [7] - R), EVEX.X bit field (EVEX byte 1, bit [6] - X), and 357BEX byte 1, bit[5] - B). The EVEX.R, EVEX.X, and EVEX.B bit fields provide the same functionality as the corresponding VEX bit fields, and are encoded using 1s complement form, i.e., ZMM0 is encoded as 411B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field QAc10 - this is the EVEX.R' bit field (EVEX Byte 1, bit [4] - R') that is used to encode either the upper 16 or lower 16 of the extended 32 register set. In one embodiment, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 315 (EVEX byte 1, bits [3:0] - mmmm) - its content encodes an implied leading opcode byte (0F, 0F 38, or 0F 3).

Data element width field 364 (EVEX byte 2, bit [7] - W) - is represented by the notation EVEX.W. EVEX.W is used to define the granularity (size) of the datatype (either 32-bit data elements or 64-bit data elements). This field is optional in the sense that it is not needed if only one data element width is supported and/or data element widths are supported using some aspect of the opcodes.

EVEX.vvvv 320 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 411b. Thus, EVEX.vvvv field 320 encodes the 4 low-order bits of the first source register specifier stored in inverted (1s complement) form. Depending on the instruction, an extra different EVEX bit field is used to extend the specifier size to 32 registers.

EVEX.U 368 Class field (EVEX byte 2, bit [2]-U) - If EVEX.U = 0, it indicates class A (support merging-writemasking) or EVEX.U0; if EVEX.U = 1, it indicates class B (support zeroing and merging-writemasking)or EVEX.U1.

Prefix encoding field 325 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 353 (EVEX byte 3, bit [7] - EH; also known as EVEX.EH, EVEX.rs, EVEX.RL, EVEX.writemask control, and EVEX.N; also illustrated with α) - its content distinguishes which one of the different augmentation operation types are to be performed.

Beta field 355 (EVEX byte 3, bits [6:4]-SSS, also known as EVEX.s2-0, EVEX.r2-0, EVEX.rr1, EVEX.LL0, EVEX.LLB; also illustrated with βββ) - distinguishes which of the operations of a specified type are to be performed.

REX' field 310 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Writemask field 371 (EVEX byte 3, bits [2:0]-kkk) - its content specifies the index of a register in the writemask registers. In one embodiment, the specific value EVEX.kkk=000 has a special behavior implying no writemask is used for the particular instruction (this may be implemented in a variety of ways including the use of a writemask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the writemask field 371 allows for partial vector operations, including loads, stores, arithmetic, logical, etc. While embodiments are described in which the writemask field's 371 content selects one of a number of writemask registers that contains the writemask to be used (and thus the writemask field's 371 content indirectly identifies that masking to be performed), alternative embodiments instead or additionally allow the mask write field's 371 content to directly specify the masking to be performed.

Real Opcode Field 330 (Byte 4) is also known as the opcode byte. Part of the opcode is specified in this field.

MOD R/M Field 340 (Byte 10) includes MOD field 342, register index field 344, and R/M field 346. The MOD field's 342 content distinguishes between memory access and non-memory access operations. The role of register index field 344 can be summarized to two situations: encoding either the destination register operand or a source register operand, or be treated as an opcode extension and not used to encode any instruction operand. The content of register index field 344, directly or through address generation, specifies the locations of the source and destination operands, be they in registers or in memory. These include a sufficient number of bits to select N registers from a PxQ (e.g., 32x512, 7x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

The role of R/M field 346 may include the following: encoding the instruction operand that references a memory address, or encoding either the destination register operand or a source register operand.

Scale, Index, Base (SIB) Byte (Byte 6) - The scale field's 350 content allows for the scaling of the index field's content for memory address generation (e.g., for address generation that uses 2scale * index + base). SIB.xxx 354 and SIB.bbb 356 - the contents of these fields have been previously referred to with regard to the register indexes Xxxx and Bbbb.

Displacement field 363A (Bytes 7-10) - when MOD field 342 contains 10, bytes 7-10 are the displacement field 363A, and it works the same as the legacy 32-bit displacement (disp32) and works at byte granularity. This may be used as part of memory address generation (e.g., for address generation that uses 2scale * index + base + displacement).

Displacement factor field 363B (Byte 7) - when MOD field 342 contains 01, byte 7 is the displacement factor field 363B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 363B is a reinterpretation of disp8; when using displacement factor field 363B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 363B substitutes the legacy x86 instruction set 8-bit displacement. Thus, the displacement factor field 363B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset).

Immediate field 372 allows for the specification of an immediate. This field is optional in the sense that is it not present in an implementation of the generic vector friendly format that does not support immediate and it is not present in instructions that do not use an immediate.

### FULL OPCODE FIELD

FIG. 3B is a block diagram illustrating the fields of the instruction format 300 that make up the full opcode field 374 according to one embodiment. Specifically, the full opcode field 374 includes the format field 382, the base operation field 343, and the data element width (W) field 363. The base operation field 343 includes the prefix encoding field 325, the opcode map field 315, and the real opcode field 330.

### REGISTER INDEX FIELD

FIG. 3C is a block diagram illustrating the fields of the format 300 that make up the register index field 345 according to one embodiment. Specifically, the register index field 345 includes the REX field 305, the REX' field 310, the MODR/M.reg field 344, the MODR/M.r/m field 346, the VVVV field 320, xxx field 354, and the bbb field 356.

### AUGMENTATION OPERATION FIELD

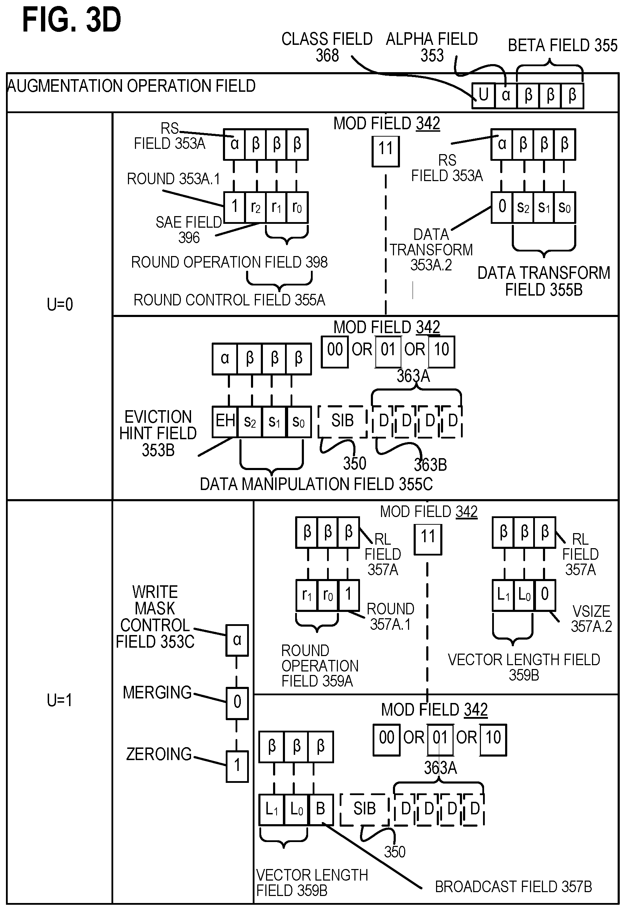

FIG. 3D is a block diagram illustrating the fields of the instruction format 300 that make up an augmentation operation field according to one embodiment. When the class (U) field 368 contains 0, it signifies EVEX.U0 (class A 368A); when it contains 1, it signifies EVEX.U1 (class B 368B). When U=0 and the MOD field 342 contains 11 (signifying a no memory access operation), the alpha field 353 (EVEX byte 3, bit [7] - EH) is interpreted as the rs field 353A. When the rs field 353A contains a 1 (round 353A.1), the beta field 355 (EVEX byte 3, bits [6:4]- SSS) is interpreted as the round control field 355A. The round control field 355A includes a one bit SAE field 396 and a two bit round operation field 398. When the rs field 353A contains a 0 (data transform 353A.2), the beta field 355 (EVEX byte 3, bits [6:4]- SSS) is interpreted as a three bit data transform field 355B. When U=0 and the MOD field 342 contains 00, 01, or 3 (signifying a memory access operation), the alpha field 353 (EVEX byte 3, bit [7] - EH) is interpreted as the eviction hint (EH) field 353B and the beta field 355 (EVEX byte 3, bits [6:4]- SSS) is interpreted as a three bit data manipulation field 355C.

When U=1, the alpha field 353 (EVEX byte 3, bit [7] - EH) is interpreted as the writemask control (Z) field 353C. When U=1 and the MOD field 342 contains 11 (signifying a no memory access operation), part of the beta field 355 (EVEX byte 3, bit [4]- S0) is interpreted as the RL field 357A; when it contains a 1 (round 357A.1) the rest of the beta field 355 (EVEX byte 3, bit [6-5]- S2-1) is interpreted as the round operation field 359A, while when the RL field 357A contains a 0 (VSIZE 357.A2) the rest of the beta field 355 (EVEX byte 3, bit [6-5]- S2-1) is interpreted as the vector length field 359B (EVEX byte 3, bit [6-5]- L1-0). When U=1 and the MOD field 342 contains 00, 01, or 10 (signifying a memory access operation), the beta field 355 (EVEX byte 3, bits [6:4]- SSS) is interpreted as the vector length field 359B (EVEX byte 3, bit [6-5]- L1-0) and the broadcast field 357B (EVEX byte 3, bit [4]- B).

### EXEMPLARY REGISTER ARCHITECTURE

FIG. 4 is a block diagram of a register architecture 400 according to one embodiment. In the embodiment illustrated, there are 32 vector registers 410 that are 512 bits wide; these registers are referenced as ZMM0 through ZMM31. The lower order 256 bits of the lower 16 ZMM registers are overlaid on registers YMM0-16. The lower order 128 bits of the lower 16 ZMM registers (the lower order 128 bits of the YMM registers) are overlaid on registers XMM0-15. In other words, the vector length field 459B selects between a maximum length and one or more other shorter lengths, where each such shorter length is half the length of the preceding length; and instructions templates without the vector length field 459B operate on the maximum vector length. Further, in one embodiment, the class B instruction templates of the instruction format 400 operate on packed or scalar single/double-precision floating point data and packed or scalar integer data. Scalar operations are operations performed on the lowest order data element position in a ZMM/YMM/XMM register; the higher order data element positions are either left the same as they were prior to the instruction or zeroed depending on the embodiment.

Writemask registers 415 - in the embodiment illustrated, there are 8 writemask registers (k0 through k7), each 114 bits in size. In an alternate embodiment, the writemask registers 415 are 16 bits in size. In some embodiments, the vector mask register k0 cannot be used as a writemask; when the encoding that would normally indicate k0 is used for a writemask, it selects a hardwired writemask of 0xFFFF, effectively disabling writemasking for that instruction.

General-purpose registers 425 - in the embodiment illustrated, there are sixteen 114-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 445, on which is aliased the MMX packed integer flat register file 450 - in the embodiment illustrated, the x87 stack is an eight-element stack used to perform scalar floating-point operations on 32/64/80-bit floating point data using the x87 instruction set extension; while the MMX registers are used to perform operations on 114-bit packed integer data, as well as to hold operands for some operations performed between the MMX and XMM registers.

Alternative embodiments may use wider or narrower registers. Additionally, alternative embodiments may use more, less, or different register files and registers.

### EXEMPLARY CORE ARCHITECTURES, PROCESSORS, AND COMPUTER ARCHITECTURES

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU (Central Processing Unit) including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### EXEMPLARY CORE ARCHITECTURES

FIG. 5A is a block diagram illustrating both an exemplary in-order pipeline and an exemplary register renaming, out-of-order issue/execution pipeline according to embodiments. FIG. 5B is a block diagram illustrating both an exemplary embodiment of an in-order architecture core and an exemplary register renaming, out-of-order issue/execution architecture core to be included in a processor according to embodiments. The solid lined boxes in FIGS. 5A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 5A, a processor pipeline 500 includes a fetch stage 502, a length decode stage 504, a decode stage 506, an allocation stage 508, a renaming stage 510, a scheduling (also known as a dispatch or issue) stage 512, a register read/memory read stage 514, an execute stage 516, a write back/memory write stage 518, an exception handling stage 522, and a commit stage 524.

FIG. 5B shows processor core 590 including a front end unit 530 coupled to an execution engine unit 550, and both are coupled to a memory unit 570. The core 590 may be a reduced instruction set computing (RISC) core, a complex instruction set computing (CISC) core, a very long instruction word (VLIW) core, or a hybrid or alternative core type. As yet another option, the core 590 may be a special-purpose core, such as, for example, a network or communication core, compression engine, coprocessor core, general purpose computing graphics processing unit (GPGPU) core, graphics core, or the like.

The front end unit 530 includes a branch prediction unit 532 coupled to an instruction cache unit 534, which is coupled to an instruction translation lookaside buffer (TLB) 536, which is coupled to an instruction fetch unit 538, which is coupled to a decode unit 540. The decode unit 540 (or decoder) may decode instructions, and generate as an output one or more micro-operations, micro-code entry points, microinstructions, other instructions, or other control signals, which are decoded from, or which otherwise reflect, or are derived from, the original instructions. The decode unit 540 may be implemented using various different mechanisms. Examples of suitable mechanisms include, but are not limited to, look-up tables, hardware implementations, programmable logic arrays (PLAs), microcode read only memories (ROMs), etc. In one embodiment, the core 590 includes a microcode ROM or other medium that stores microcode for certain macroinstructions (e.g., in decode unit 540 or otherwise within the front end unit 530). The decode unit 540 is coupled to a rename/allocator unit 552 in the execution engine unit 550.

The execution engine unit 550 includes the rename/allocator unit 552 coupled to a retirement unit 554 and a set of one or more scheduler unit(s) 556. The scheduler unit(s) 556 represents any number of different schedulers, including reservations stations, central instruction window, etc. The scheduler unit(s) 556 is coupled to the physical register file(s) unit(s) 558. Each of the physical register file(s) units 558 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 558 comprises a vector registers unit, a writemask registers unit, and a scalar registers unit. These register units may provide architectural vector registers, vector mask registers, and general purpose registers. The physical register file(s) unit(s) 558 is overlapped by the retirement unit 554 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 554 and the physical register file(s) unit(s) 558 are coupled to the execution cluster(s) 560. The execution cluster(s) 560 includes a set of one or more execution units 562 and a set of one or more memory access units 564. The execution units 562 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 556, physical register file(s) unit(s) 558, and execution cluster(s) 560 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 564). It should also be understood that where separate pipelines are used, one or more of these pipelines may be out-of-order issue/execution and the rest in-order.

The set of memory access units 564 is coupled to the memory unit 570, which includes a data TLB unit 572 coupled to a data cache unit 574 coupled to a level 2 (L2) cache unit 576. In one exemplary embodiment, the memory access units 564 may include a load unit, a store address unit, and a store data unit, each of which is coupled to the data TLB unit 572 in the memory unit 570. The instruction cache unit 534 is further coupled to a level 2 (L2) cache unit 576 in the memory unit 570. The L2 cache unit 576 is coupled to one or more other levels of cache and eventually to a main memory.

By way of example, the exemplary register renaming, out-of-order issue/execution core architecture may implement the pipeline 500 as follows: 1) the instruction fetch 538 performs the fetch and length decoding stages 502 and 504; 2) the decode unit 540 performs the decode stage 506; 3) the rename/allocator unit 552 performs the allocation stage 508 and renaming stage 510; 4) the scheduler unit(s) 556 performs the schedule stage 512; 5) the physical register file(s) unit(s) 558 and the memory unit 570 perform the register read/memory read stage 514; the execution cluster 560 perform the execute stage 516; 6) the memory unit 570 and the physical register file(s) unit(s) 558 perform the write back/memory write stage 518; 5) various units may be involved in the exception handling stage 522; and 8) the retirement unit 554 and the physical register file(s) unit(s) 558 perform the commit stage 524.

The core 590 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 590 includes logic to support a packed data instruction set extension (e.g., AVX1, AVX2), thereby allowing the operations used by many multimedia applications to be performed using packed data.

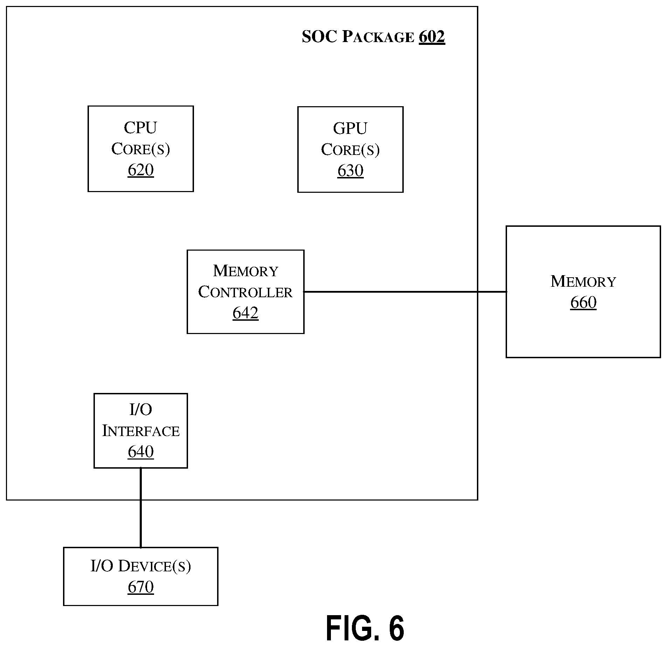

FIG. 6 illustrates a block diagram of an SOC package in accordance with an embodiment. As illustrated in FIG. 6, SOC 602 includes one or more Central Processing Unit (CPU) cores 620, one or more Graphics Processor Unit (GPU) cores 630, an Input/Output (I/O) interface 640, and a memory controller 642. Various components of the SOC package 602 may be coupled to an interconnect or bus such as discussed herein with reference to the other figures. Also, the SOC package 602 may include more or less components, such as those discussed herein with reference to the other figures. Further, each component of the SOC package 602 may include one or more other components, e.g., as discussed with reference to the other figures herein. In one embodiment, SOC package 602 (and its components) is provided on one or more Integrated Circuit (IC) die, e.g., which are packaged into a single semiconductor device.

As illustrated in FIG. 6, SOC package 602 is coupled to a memory 660 via the memory controller 642. In an embodiment, the memory 660 (or a portion of it) can be integrated on the SOC package 602.

The I/O interface 640 may be coupled to one or more I/O devices 670, e.g., via an interconnect and/or bus such as discussed herein with reference to other figures. I/O device(s) 670 may include one or more of a keyboard, a mouse, a touchpad, a display, an image/video capture device (such as a camera or camcorder/video recorder), a touch screen, a speaker, or the like.

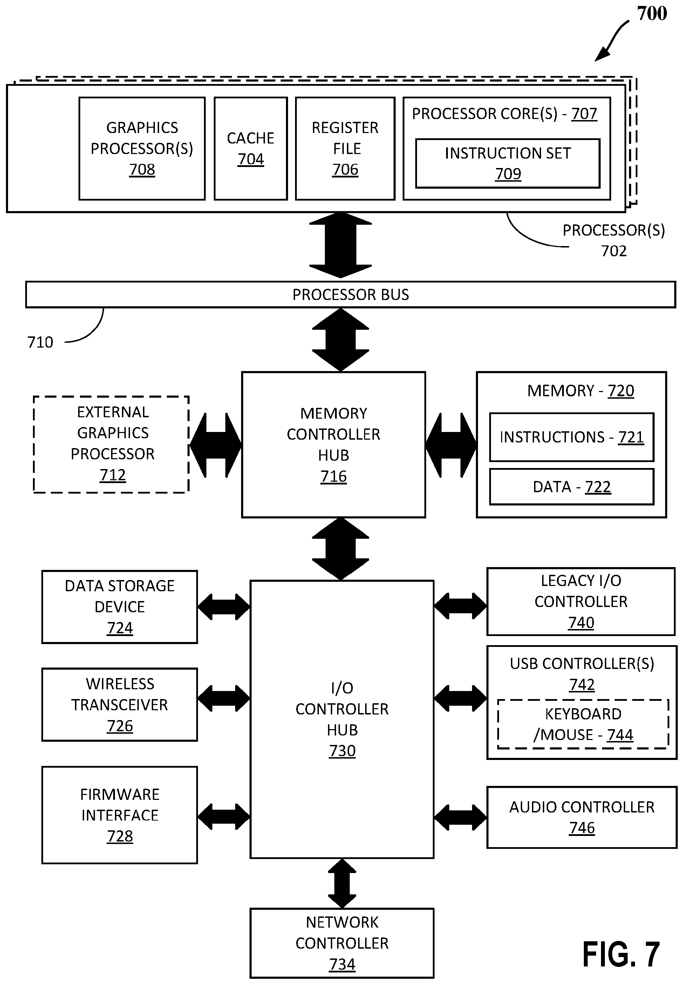

FIG. 7 is a block diagram of a processing system 700, according to an embodiment. In various embodiments the system 700 includes one or more processors 702 and one or more graphics processors 708, and may be a single processor desktop system, a multiprocessor workstation system, or a server system having a large number of processors 702 or processor cores 707. In on embodiment, the system 700 is a processing platform incorporated within a system-on-a-chip (SoC or SOC) integrated circuit for use in mobile, handheld, or embedded devices.

An embodiment of system 700 can include, or be incorporated within a server-based gaming platform, a game console, including a game and media console, a mobile gaming console, a handheld game console, or an online game console. In some embodiments system 700 is a mobile phone, smart phone, tablet computing device or mobile Internet device. Data processing system 700 can also include, couple with, or be integrated within a wearable device, such as a smart watch wearable device, smart eyewear device, augmented reality device, or virtual reality device. In some embodiments, data processing system 700 is a television or set top box device having one or more processors 702 and a graphical interface generated by one or more graphics processors 708.

In some embodiments, the one or more processors 702 each include one or more processor cores 707 to process instructions which, when executed, perform operations for system and user software. In some embodiments, each of the one or more processor cores 707 is configured to process a specific instruction set 709. In some embodiments, instruction set 709 may facilitate Complex Instruction Set Computing (CISC), Reduced Instruction Set Computing (RISC), or computing via a Very Long Instruction Word (VLIW). Multiple processor cores 707 may each process a different instruction set 709, which may include instructions to facilitate the emulation of other instruction sets. Processor core 707 may also include other processing devices, such a Digital Signal Processor (DSP).

In some embodiments, the processor 702 includes cache memory 704. Depending on the architecture, the processor 702 can have a single internal cache or multiple levels of internal cache. In some embodiments, the cache memory is shared among various components of the processor 702. In some embodiments, the processor 702 also uses an external cache (e.g., a Level-3 (L3) cache or Last Level Cache (LLC)) (not shown), which may be shared among processor cores 707 using known cache coherency techniques. A register file 706 is additionally included in processor 702 which may include different types of registers for storing different types of data (e.g., integer registers, floating point registers, status registers, and an instruction pointer register). Some registers may be general-purpose registers, while other registers may be specific to the design of the processor 702.

In some embodiments, processor 702 is coupled to a processor bus 710 to transmit communication signals such as address, data, or control signals between processor 702 and other components in system 700. In one embodiment the system 700 uses an exemplary 'hub' system architecture, including a memory controller hub 716 and an Input Output (I/O) controller hub 730. A memory controller hub 716 facilitates communication between a memory device and other components of system 700, while an I/O Controller Hub (ICH) 730 provides connections to I/O devices via a local I/O bus. In one embodiment, the logic of the memory controller hub 716 is integrated within the processor.

Memory device 720 can be a dynamic random access memory (DRAM) device, a static random access memory (SRAM) device, flash memory device, phase-change memory device, or some other memory device having suitable performance to serve as process memory. In one embodiment the memory device 720 can operate as system memory for the system 700, to store data 722 and instructions 721 for use when the one or more processors 702 executes an application or process. Memory controller hub 716 also couples with an optional external graphics processor 712, which may communicate with the one or more graphics processors 708 in processors 702 to perform graphics and media operations.

In some embodiments, ICH 730 enables peripherals to connect to memory device 720 and processor 702 via a high-speed I/O bus. The I/O peripherals include, but are not limited to, an audio controller 746, a firmware interface 728, a wireless transceiver 726 (e.g., Wi-Fi, Bluetooth), a data storage device 724 (e.g., hard disk drive, flash memory, etc.), and a legacy I/O controller 740 for coupling legacy (e.g., Personal System 2 (PS/2)) devices to the system. One or more Universal Serial Bus (USB) controllers 742 connect input devices, such as keyboard and mouse 744 combinations. A network controller 734 may also couple to ICH 730. In some embodiments, a high-performance network controller (not shown) couples to processor bus 710. It will be appreciated that the system 700 shown is exemplary and not limiting, as other types of data processing systems that are differently configured may also be used. For example, the I/O controller hub 730 may be integrated within the one or more processor 702, or the memory controller hub 716 and I/O controller hub 730 may be integrated into a discreet external graphics processor, such as the external graphics processor 712.

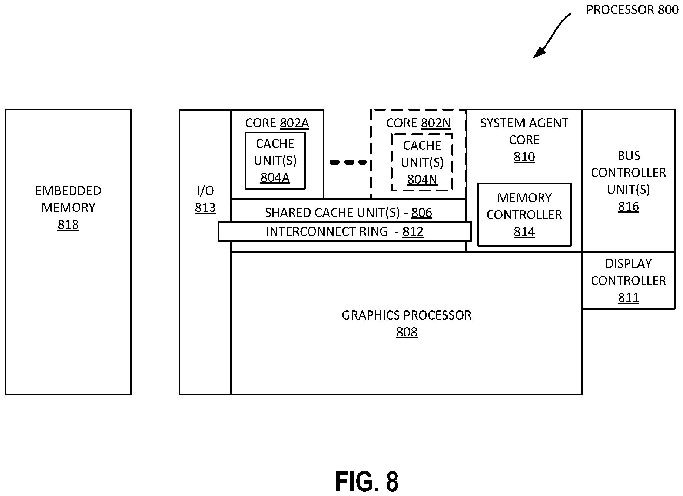

FIG. 8 is a block diagram of an embodiment of a processor 800 having one or more processor cores 802A to 802N, an integrated memory controller 814, and an integrated graphics processor 808. Those elements of FIG. 8 having the same reference numbers (or names) as the elements of any other figure herein can operate or function in any manner similar to that described elsewhere herein, but are not limited to such. Processor 800 can include additional cores up to and including additional core 802N represented by the dashed lined boxes. Each of processor cores 802A to 802N includes one or more internal cache units 804A to 804N. In some embodiments each processor core also has access to one or more shared cached units 806.

The internal cache units 804A to 804N and shared cache units 806 represent a cache memory hierarchy within the processor 800. The cache memory hierarchy may include at least one level of instruction and data cache within each processor core and one or more levels of shared mid-level cache, such as a Level 2 (L2), Level 3 (L3), Level 4 (L4), or other levels of cache, where the highest level of cache before external memory is classified as the LLC. In some embodiments, cache coherency logic maintains coherency between the various cache units 806 and 804A to 804N.

In some embodiments, processor 800 may also include a set of one or more bus controller units 816 and a system agent core 810. The one or more bus controller units 816 manage a set of peripheral buses, such as one or more Peripheral Component Interconnect buses (e.g., PCI, PCI Express). System agent core 810 provides management functionality for the various processor components. In some embodiments, system agent core 810 includes one or more integrated memory controllers 814 to manage access to various external memory devices (not shown).

In some embodiments, one or more of the processor cores 802A to 802N include support for simultaneous multi-threading. In such embodiment, the system agent core 810 includes components for coordinating and operating cores 802A to 802N during multi-threaded processing. System agent core 810 may additionally include a power control unit (PCU), which includes logic and components to regulate the power state of processor cores 802A to 802N and graphics processor 808.

In some embodiments, processor 800 additionally includes graphics processor 808 to execute graphics processing operations. In some embodiments, the graphics processor 808 couples with the set of shared cache units 806, and the system agent core 810, including the one or more integrated memory controllers 814. In some embodiments, a display controller 811 is coupled with the graphics processor 808 to drive graphics processor output to one or more coupled displays. In some embodiments, display controller 811 may be a separate module coupled with the graphics processor via at least one interconnect, or may be integrated within the graphics processor 808 or system agent core 810.

In some embodiments, a ring-based interconnect unit 812 is used to couple the internal components of the processor 800. However, an alternative interconnect unit may be used, such as a point-to-point interconnect, a switched interconnect, or other techniques, including techniques well known in the art. In some embodiments, graphics processor 808 couples with the ring interconnect 812 via an I/O link 813.

The exemplary I/O link 813 represents at least one of multiple varieties of I/O interconnects, including an on package I/O interconnect which facilitates communication between various processor components and a high-performance embedded memory module 818, such as an eDRAM (or embedded DRAM) module. In some embodiments, each of the processor cores 802 to 802N and graphics processor 808 use embedded memory modules 818 as a shared Last Level Cache.

In some embodiments, processor cores 802A to 802N are homogenous cores executing the same instruction set architecture. In another embodiment, processor cores 802A to 802N are heterogeneous in terms of instruction set architecture (ISA), where one or more of processor cores 802A to 802N execute a first instruction set, while at least one of the other cores executes a subset of the first instruction set or a different instruction set. In one embodiment processor cores 802A to 802N are heterogeneous in terms of microarchitecture, where one or more cores having a relatively higher power consumption couple with one or more power cores having a lower power consumption. Additionally, processor 800 can be implemented on one or more chips or as an SoC integrated circuit having the illustrated components, in addition to other components.

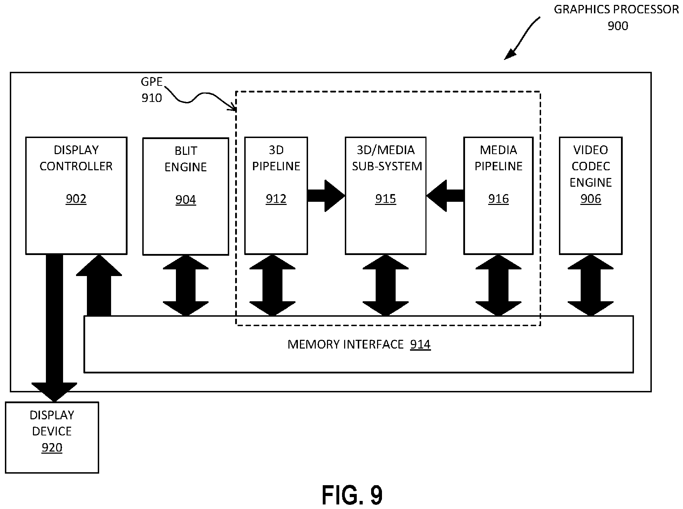

FIG. 9 is a block diagram of a graphics processor 900, which may be a discrete graphics processing unit, or may be a graphics processor integrated with a plurality of processing cores. In some embodiments, the graphics processor communicates via a memory mapped I/O interface to registers on the graphics processor and with commands placed into the processor memory. In some embodiments, graphics processor 900 includes a memory interface 914 to access memory. Memory interface 914 can be an interface to local memory, one or more internal caches, one or more shared external caches, and/or to system memory.

In some embodiments, graphics processor 900 also includes a display controller 902 to drive display output data to a display device 920. Display controller 902 includes hardware for one or more overlay planes for the display and composition of multiple layers of video or user interface elements. In some embodiments, graphics processor 900 includes a video codec engine 906 to encode, decode, or transcode media to, from, or between one or more media encoding formats, including, but not limited to Moving Picture Experts Group (MPEG) formats such as MPEG-2, Advanced Video Coding (AVC) formats such as H.264/MPEG-4 AVC, as well as the Society of Motion Picture & Television Engineers (SMPTE) 321M/VC-1, and Joint Photographic Experts Group (JPEG) formats such as JPEG, and Motion JPEG (MJPEG) formats.

In some embodiments, graphics processor 900 includes a block image transfer (BLIT) engine 904 to perform two-dimensional (2D) rasterizer operations including, for example, bit-boundary block transfers. However, in one embodiment, 3D graphics operations are performed using one or more components of graphics processing engine (GPE) 910. In some embodiments, graphics processing engine 910 is a compute engine for performing graphics operations, including three-dimensional (3D) graphics operations and media operations.

In some embodiments, GPE 910 includes a 3D pipeline 912 for performing 3D operations, such as rendering three-dimensional images and scenes using processing functions that act upon 3D primitive shapes (e.g., rectangle, triangle, etc.). The 3D pipeline 912 includes programmable and fixed function elements that perform various tasks within the element and/or spawn execution threads to a 3D/Media sub-system 915. While 3D pipeline 912 can be used to perform media operations, an embodiment of GPE 910 also includes a media pipeline 916 that is specifically used to perform media operations, such as video post-processing and image enhancement.

In some embodiments, media pipeline 916 includes fixed function or programmable logic units to perform one or more specialized media operations, such as video decode acceleration, video de-interlacing, and video encode acceleration in place of, or on behalf of video codec engine 906. In some embodiments, media pipeline 916 additionally includes a thread spawning unit to spawn threads for execution on 3D/Media sub-system 915. The spawned threads perform computations for the media operations on one or more graphics execution units included in 3D/Media sub-system 915.

In some embodiments, 3D/Media subsystem 915 includes logic for executing threads spawned by 3D pipeline 912 and media pipeline 916. In one embodiment, the pipelines send thread execution requests to 3D/Media subsystem 915, which includes thread dispatch logic for arbitrating and dispatching the various requests to available thread execution resources. The execution resources include an array of graphics execution units to process the 3D and media threads. **In** some embodiments, 3D/Media subsystem 915 includes one or more internal caches for thread instructions and data. **In** some embodiments, the subsystem also includes shared memory, including registers and addressable memory, to share data between threads and to store output data.

**In** this description, numerous specific details are set forth to provide a more thorough understanding. However, it will be apparent to one of skill in the art that the embodiments described herein may be practiced without one or more of these specific details. **In** other instances, well-known features have not been described to avoid obscuring the details of the present embodiments.

**In** various embodiments, one or more operations discussed with reference to Figs. 1A et seq. may be performed by one or more components (interchangeably referred to herein as "logic") discussed with reference to any of the figures.

**In** various embodiments, the operations discussed herein, e.g., with reference to Figs. 1A et seq., may be implemented as hardware (e.g., logic circuitry), software, firmware, or combinations thereof, which may be provided as a computer program product, e.g., including one or more tangible (e.g., non-transitory) machine-readable or computer-readable media having stored thereon instructions (or software procedures) used to program a computer to perform a process discussed herein. The machine-readable medium may include a storage device such as those discussed with respect to the figures.

Additionally, such computer-readable media may be downloaded as a computer program product, wherein the program may be transferred from a remote computer (e.g., a server) to a requesting computer (e.g., a client) by way of data signals provided in a carrier wave or other propagation medium via a communication link (e.g., a bus, a modem, or a network connection).

Further, while various embodiments described herein may use the term System-on-a-Chip or System-on-Chip ("SoC" or "SOC") to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various embodiments of the present disclosure, a device or system may have one or more processors (e.g., one or more processor cores) and associated circuitry (e.g., I/O circuitry, power delivery circuitry, etc.) arranged in a disaggregated collection of discrete dies, tiles, and/or chiplets (e.g., one or more discrete processor core die arranged adjacent to one or more other die such as a memory die, I/O die, etc.). In such disaggregated devices and systems, the various dies, tiles, and/or chiplets may be physically and/or electrically coupled together by a package structure including, for example, various packaging substrates, interposers, active interposers, photonic interposers, interconnect bridges, and the like. The disaggregated collection of discrete dies, tiles, and/or chiplets may also be part of a System-on-Package ("SoP").

Reference in the specification to "one embodiment" or "an embodiment" means that a particular feature, structure, and/or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Thus, although embodiments have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus comprising:
a register file (116), to be formed by a plurality of registers, wherein the register file (116) comprises a plurality of register file entries; and
execution circuitry (108) to cause issuance of a prefetch request to cause data to be prefetched from a data cache unit (120) into an entry of the register file (116),
wherein the prefetch request is to be issued in response to allocation of a load operation, and
wherein the execution circuitry (108) is to store an indication of whether a prefetch operation is to be performed for the prefetch request in a prefetch table (110),
**characterized in that** the indication is to be updated based on a hint provided by one of: an instruction, a compiler, a software application, an operating system,
wherein the hint is included in one or more bits in an operand of a load instruction corresponding to the load operation.

2. The apparatus of claim 1, wherein the prefetch operation is to be performed based at least in part on a predicted address to be read from the prefetch table (110), or wherein, in response to a match between the predicted address and an address of the load operation, the prefetched data in the entry of the register file (116) is to be supplied to one or more operations that are dependent on the load operation, or wherein, in response to a mismatch between the predicted address and an address of the load operation, the load operation is to access the data from the data cache unit (120) and supply the accessed data to one or more operations that are dependent on the load operation.

3. The apparatus of claim 1, wherein the data cache unit (120) comprises a Level 1, L1, cache.

4. The apparatus of claim 1, wherein the prefetch request is to be issued in response to allocation of the load operation in a reorder buffer (126).

5. The apparatus of claim 1, wherein the prefetch request is to be issued in response to allocation of the load operation and after a renaming stage (106).

6. The apparatus of claim 1, further comprising a reservation station (124) to store one or more bits to track a progress of a prefetch operation to be invoked in response to the prefetch request.

7. The apparatus of claim 1, wherein the execution circuitry (108) is to issue the prefetch request for as many load operations as allowed by available bandwidth or resources, or wherein the execution circuitry (108) is to cause issuance of the prefetch request at a lower priority than ongoing load operation bypasses, pending hardware prefetch requests, or software prefetch requests.

8. The apparatus of claim 1, wherein a processor, having one or more processor cores, comprises the register file (116) and the execution circuitry (108).

9. The apparatus of claim 1, further comprising:
a processor, having one or more processor cores;
the processor to comprise the plurality of registers that form the register file (116); and
a bus to communicate data between the one or more processor cores and the data cache unit (120).

10. A method comprising:
storing a plurality of register file entries in a register file (116), wherein the register file (116) comprises a plurality of registers; and
issuing a prefetch request to cause data to be prefetched from a data cache unit into an entry of the register file (116),
wherein the prefetch request is to be issued in response to allocation of a load operation, and
wherein the method further comprising storing an indication of whether a prefetch operation is to be performed for the prefetch request in a prefetch table (110),
**characterized in that** the indication is to be updated based on a hint provided by one of: an instruction, a compiler, a software application, an operating system, and
wherein the hint is included in one or more bits in an operand of a load instruction corresponding to the load operation.

11. The method of claim 10, further comprising performing the prefetch operation based at least in part on a predicted address to be read from the prefetch table (110), or further comprising supplying the prefetched data in the entry of the register file (116) to one or more operations that are dependent on the load operation in response to a match between the predicted address and an address of the load operation.

12. Machine-readable storage including machine-readable instructions, which when executed by a computer, causes the computer to carry out the method according to any one of claims 10 and 11.

## Patentansprüche

1. Vorrichtung, umfassend:
eine Registerdatei (116), die durch eine Mehrzahl von Registern gebildet wird, wobei die Registerdatei (116) eine Mehrzahl von Registerdateieinträgen umfasst; und
eine Ausführungsschaltungsanordnung (108), um eine Ausgabe einer Vorabrufanforderung zu veranlassen, um zu veranlassen, dass Daten vorab aus einer Datencacheeinheit (120) in einen Eintrag der Registerdatei abgerufen (116) werden,
wobei die Vorabrufanforderung als Reaktion auf eine Zuweisung einer Ladeoperation ausgegeben wird, und
wobei die Ausführungsschaltungsanordnung (108) geeignet ist zum Speichern einer Anzeige, ob für die Vorabrufanforderung eine Vorabrufoperation in einer Vorabruftabelle (110) durchgeführt werden muss,
**dadurch gekennzeichnet, dass** die Anzeige basierend auf einem Hinweis aktualisiert werden muss, der bereitgestellt wird durch eine von: einer Anweisung, einem Compiler, einer Softwareanwendung, einem Betriebssystem,
wobei der Hinweis, in einem oder mehreren Bits in einem Operanden einer Ladeanweisung enthalten ist, die der Ladeoperation entspricht.

2. Vorrichtung nach Anspruch 1, wobei die Vorabrufoperation mindestens teilweise basierend auf einer vorhergesagten Adresse durchgeführt werden muss, die aus der Vorabruftabelle (110) ausgelesen werden muss, oder wobei, als Reaktion auf eine Übereinstimmung zwischen der vorhergesagten Adresse und einer Adresse der Ladeoperation, die vorab abgerufenen Daten in dem Eintrag der Registerdatei (116) an eine oder mehrere Operationen geliefert werden müssen, die von der Ladeoperation abhängig sind, oder wobei, als Reaktion auf eine Nichtübereinstimmung zwischen der vorhergesagten Adresse und einer Adresse der Ladeoperation, die Ladeoperation auf die Daten aus der Datencacheeinheit (120) zugreifen muss und die abgegriffenen Daten an eine oder mehrere Operationen liefert, die von der Ladeoperation abhängig sind.

3. Vorrichtung nach Anspruch 1, wobei die Datencacheeinheit (120) einen Level-1-Cache, L1-Cache, umfasst.

4. Vorrichtung nach Anspruch 1, wobei die Vorabrufanforderung als Reaktion auf eine Zuweisung der Ladeoperation in einen Neuordnungpuffer (126) ausgegeben werden muss.

5. Vorrichtung nach Anspruch 1, wobei die Vorabrufanforderung als Reaktion auf eine Zuweisung der Ladeoperation nach einer Neubenennungsstufe (106) ausgegeben werden muss.

6. Vorrichtung nach Anspruch 1, die ferner eine Reservierungsstation (124) umfasst, um ein oder mehrere Bits zum Verfolgen eines Fortschritts einer Vorabrufoperation zu speichern, um sie als Reaktion auf die Vorabrufanforderung aufzurufen.

7. Vorrichtung nach Anspruch 1, wobei die Ausführungsschaltungsanordnung (108) geeignet ist zum Ausgeben der Vorabrufanforderung für so viele Ladeoperationen, wie sie durch eine zur Verfügung stehende Bandbreite oder durch zur Verfügung stehende Ressourcen erlaubt sind, oder wobei die Ausführungsschaltungsanordnung (108) geeignet ist zum Veranlassen einer Ausgabe der Vorabrufanforderung mit einer niedrigeren Priorität als laufende Ladeoperationüberbrückungen, anhängige Hardware-Vorabrufanforderungen oder anhängige Software-Vorabrufanforderungen.

8. Vorrichtung nach Anspruch 1, wobei ein Prozessor, der einen oder mehrere Prozessorkerne aufweist, die Registerdatei (116) und die Ausführungsschaltungsanordnung (108) umfasst.

9. Vorrichtung nach Anspruch 1, die ferner umfasst:
einen Prozessor, der einen oder mehrere Prozessorkerne aufweist;
wobei der Prozessor die Mehrzahl von Registern umfasst, welche die Registerdatei (116) bilden; und
einen Bus zum Kommunizieren von Daten zwischen dem einen oder den mehreren Prozessorkernen und der Datencacheeinheit (120).

10. Verfahren, umfassend:
Speichern einer Mehrzahl von Registerdateieinträgen in einer Registerdatei (116), wobei die Registerdatei (116) eine Mehrzahl von Registern umfasst; und
Ausgeben einer Vorabrufanforderung, um zu veranlassen, dass Daten vorab aus einer Datencacheeinheit in einen Eintrag der Registerdatei abgerufen (116) werden,
wobei die Vorabrufanforderung als Reaktion auf eine Zuweisung einer Ladeoperation ausgegeben wird, und
wobei das Verfahren ferner ein Speichern einer Anzeige umfasst, ob für die Vorabrufanforderung eine Vorabrufoperation in einer Vorabruftabelle (110) durchgeführt werden muss,
**dadurch gekennzeichnet, dass** die Anzeige basierend auf einem Hinweis aktualisiert werden muss, der bereitgestellt wird durch eine von: einer Anweisung, einem Compiler, einer Softwareanwendung, einem Betriebssystem, und
wobei der Hinweis, in einem oder mehreren Bits in einem Operanden einer Ladeanweisung enthalten ist, die der Ladeoperation entspricht.

11. Verfahren nach Anspruch 10, das ferner ein Durchführen der Vorabrufoperation mindestens teilweise basierend auf einer vorhergesagten Adresse umfasst, die aus der Vorabruftabelle (110) ausgelesen werden muss, oder ferner, als Reaktion auf eine Übereinstimmung zwischen der vorhergesagten Adresse und einer Adresse der Ladeoperation, ein Liefern der vorab aus dem Eintrag der Registerdatei (116) abgerufenen Daten zu einer oder mehreren Operationen umfasst, die von der Ladeoperation abhängig sind.

12. Maschinenlesbarer Speicher, der maschinenlesbare Anweisungen beinhaltet, die, wenn sie von einem Computer ausgeführt werden, den Computer veranlassen, das Verfahren nach einem der Ansprüche 10 und 11 auszuführen.

## Revendications

1. Appareil comprenant :
un fichier de registres (116), destiné à être formé par une pluralité de registres, où le fichier de registres (116) comprend une pluralité d'entrées de fichier de registres ; et
des circuits d'exécution (108) destinés à provoquer l'émission d'une demande de prélecture afin de provoquer la prélecture de données à partir d'une unité de cache de données (120) dans une entrée du fichier de registres (116),
où la demande de prélecture doit être émise en réponse à l'attribution d'une opération de chargement, et
où les circuits d'exécution (108) doivent stocker une indication précisant si une opération de prélecture doit être effectuée pour la demande de prélecture dans une table de prélecture (110),
**caractérisé en ce que** l'indication doit être mise à jour sur la base d'une indication fournie par l'un des éléments suivants : une instruction, un compilateur, une application logicielle, un système d'exploitation,
où l'indication est incluse dans un ou plusieurs bits d'un opérande d'une instruction de chargement correspondant à l'opération de chargement.

2. Appareil selon la revendication 1, dans lequel l'opération de prélecture doit être effectuée sur la base, au moins en partie, d'une adresse prédite à lire dans la table de prélecture (110), ou dans lequel, en réponse à une correspondance entre l'adresse prédite et une adresse de l'opération de chargement, les données lues par anticipation dans l'entrée du fichier de registres (116) doivent être fournies à une ou plusieurs opérations qui dépendent de l'opération de chargement, ou dans lequel, en réponse à une non-correspondance entre l'adresse prédite et une adresse de l'opération de chargement, l'opération de chargement doit accéder aux données à partir de l'unité de cache de données (120) et fournir les données accédées à une ou plusieurs opérations qui dépendent de l'opération de chargement.

3. Appareil selon la revendication 1, dans lequel l'unité de cache de données (120) comprend un cache de niveau 1, L1.

4. Appareil selon la revendication 1, dans lequel la demande de prélecture doit être émise en réponse à l'allocation de l'opération de chargement dans un tampon de réorganisation (126).

5. Appareil selon la revendication 1, dans lequel la demande de prélecture doit être émise en réponse à l'allocation de l'opération de chargement et après une étape de renommage (106).

6. Appareil selon la revendication 1, comprenant en outre une station de réservation (124) pour stocker un ou plusieurs bits afin de suivre la progression d'une opération de prélecture à invoquer en réponse à la demande de prélecture.

7. Appareil selon la revendication 1, dans lequel les circuits d'exécution (108) doivent émettre la demande de prélecture pour autant d'opérations de chargement que le permettent la bande passante ou les ressources disponibles, ou dans lequel les circuits d'exécution (108) doivent provoquer l'émission de la demande de prélecture avec une priorité inférieure à celle des contournements d'opérations de chargement en cours, des demandes de prélecture matérielles en attente ou des demandes de prélecture logicielles.

8. Appareil selon la revendication 1, dans lequel un processeur, comprenant un ou plusieurs cœurs de processeur, comprend le fichier de registres (116) et les circuits d'exécution (108).

9. Appareil selon la revendication 1, comprenant en outre :
un processeur, comprenant un ou plusieurs cœurs de processeur ;
le processeur comprenant la pluralité de registres qui forment le fichier de registres (116) ; et
un bus pour communiquer des données entre les un ou plusieurs cœurs de processeur et l'unité de cache de données (120).

10. Procédé comprenant les étapes suivantes :
stocker une pluralité d'entrées de fichier de registres dans un fichier de registres (116), où le fichier de registres (116) comprend une pluralité de registres ; et
émettre une demande de prélecture pour provoquer la prélecture de données à partir d'une unité de cache de données dans une entrée du fichier de registres (116),
où la demande de prélecture doit être émise en réponse à l'attribution d'une opération de chargement, et
où le procédé comprend en outre de stocker une indication précisant si une opération de prélecture doit être effectuée pour la demande de prélecture dans une table de prélecture (110),
**caractérisé en ce que** l'indication doit être mise à jour sur la base d'une indication fournie par l'un des éléments suivants : une instruction, un compilateur, une application logicielle, un système d'exploitation, et
où l'indication est incluse dans un ou plusieurs bits d'un opérande d'une instruction de chargement correspondant à l'opération de chargement.

11. Procédé selon la revendication 10, comprenant en outre d'exécuter l'opération de prélecture sur la base, au moins en partie, d'une adresse prédite à lire dans la table de prélecture (110), ou comprenant en outre de fournir les données lues par anticipation dans l'entrée du fichier de registres (116) à une ou plusieurs opérations qui dépendent de l'opération de chargement en réponse à une correspondance entre l'adresse prédite et une adresse de l'opération de chargement.

12. Support de stockage lisible par machine comprenant des instructions lisibles par machine qui, lorsqu'elles sont exécutées par un ordinateur, amènent l'ordinateur à mettre en œuvre le procédé selon l'une quelconque des revendications 10 et 11.
